# FASCICULE DE BREVET EUROPEEN

(11) **EP 2 041 429 B1**
(45) Date de publication et mention de la délivrance du brevet: **26.12.2012**
(21) Numéro de dépôt: 07866399.4
(22) Date de dépôt: 06.07.2007
(51) Int. Cl.: F03D 1/00, F03D 11/00

(54) **DISPOSITIF ET PROCÉDÉ DE DÉMONTAGE RAPIDE D'UN ROTOR ET D'UNE NACELLE DU MÂT D'UNE ÉOLIENNE, AINSI QU'UNE ÉOLIENNE POURVUE D'UN TEL DISPOSITIF**
VORRICHTUNG UND VERFAHREN ZUR SCHNELLEN DEMONTAGE DES ROTORS UND DER GONDEL VON EINEM WINDTURBINENMAST UND MIT EINER SOLCHEN VORRICHTUNG AUSGESTATTETE WINDTURBINE
DEVICE AND METHOD FOR RAPIDLY DISMANTLING THE ROTOR AND THE NACELLE FROM A WIND TURBINE MAST, AND WIND TURBINE PROVIDED WITH SUCH DEVICE

(30) Priorité: 12.07.2006 FR 0606368
(43) Date de publication de la demande: 01.04.2009
(73) Titulaire: Eole Overseas Company Limited, 10970 Nicosia (CY)
(72) Inventeur: AMRAM, Raoul, 75012 Paris (FR)
(74) Mandataire: Laget, Jean-Loup
(86) Numéro de dépôt international: PCT/FR2007/001161
(87) Numéro de publication internationale: WO 2008/059118

(56) Documents cités:
- EP-A2- 1 350 953
- WO-A-2004/088133
- DE-A1- 19 647 515
- DE-A1- 19 741 988
- JP-A- 11 082 285
- US-A- 4 311 434
- US-A1- 2002 171 247
- US-B1- 6 868 646

## Description

L'invention est relative au domaine des éoliennes et concerne plus particulièrement un dispositif de démontage rapide d'un rotor et d'une nacelle du mât d'une éolienne.

En outre, l'invention concerne une éolienne pourvue d'un tel dispositif, ainsi qu'un procédé de démontage rapide d'un rotor et d'une nacelle du mât d'une éolienne.

Le dispositif de démontage rapide selon l'invention est principalement destiné à être utilisé en cas de prévision de cyclones afin de mettre rapidement à l'abri le rotor et la nacelle de l'éolienne. La nacelle contient la génératrice de l'éolienne, alors que le rotor est composé d'un moyeu relié à l'arbre de la génératrice et de deux ou trois pales fixées à équidistance sur le moyeu. Ce sont les éléments les plus exposés et les plus fragiles de l'éolienne en cas de vents très forts.

Aujourd'hui, l'éolienne présentant la meilleure résistance aux vents peut supporter des vents linéaires de 180 km/h (50 m/s), et des rafales pouvant atteindre jusqu'à 252 km/h (70 m/s) pendant approximativement 3 secondes.

Cependant, il en est autrement des vents cycloniques qui sont des vents plus durables et qui près du coeur du cyclone sont tourbillonnants, ascendants ou descendants. Ces vents cycloniques sont classés de la manière suivante :
- Catégorie 1 : des vents atteignant une vitesse de 118 à 152 km/h
- Catégorie 2 : des vents atteignant une vitesse de 153 à 176 km/h
- Catégorie 3 : des vents atteignant une vitesse de 177 à 208 km/h
- Catégorie 4 : des vents atteignant une vitesse de 209 à 248 km/h
- Catégorie 5 : des vents atteignant une vitesse de supérieure à 248 km/h.

Il ressort de ce qui précède que dans l'hypothèse où un cyclone est prévu de la catégorie 2, 3 et plus, la seule façon pour ne pas exposer l'éolienne à des risques majeurs consiste à démonter le rotor et la nacelle du mât de l'éolienne, les abaisser au sol, et les mettre à l'abri des vents cycloniques bien avant l'arrivée du cyclone.

Cependant, on dispose d'un laps de temps relativement court, ne dépassant pas les 96 heures, pour effectuer ce démontage et les grues ayant servi au montage du mât, de la nacelle et du rotor ne sont plus rapidement disponibles sur place.

Nous sommes est ainsi confrontés à un véritable problème qui devient encore plus précaire si en plus le rotor et la nacelle doivent être démontés de plusieurs éoliennes, ce qui est pratiquement toujours le cas du fait que les éoliennes sont en général regroupées en parcs d'éoliennes.

Par ailleurs, si en plus la ou les éoliennes se trouvent sur une île ou dans des régions montagneuses ou autrement difficiles d'accès pour d'autres raisons, nous ne disposons d'aucune possibilité de démonter le rotor et la nacelle avant l'arrivée du cyclone et le risque est très grand de voir la ou les éoliennes pratiquement détruites.

On a déjà essayé de résoudre ce problème de protection du rotor et de la nacelle, mais sans démontage.

Ainsi, le document FR 2 832 784 propose d'utiliser un mât support en combinaison avec un mât de levage. Les deux mâts forment un angle d'environ 90° l'un par rapport à l'autre et sont articulés en un même point sur un pied fixé au sol. Le mât de levage permet de basculer le mât de support qui porte la nacelle et le rotor pour poser ces éléments sur le sol. Cependant, cette construction exige une très grande surface libre dans le sens de basculement du mât de support.

En outre, avec ce dispositif, tout l'ensemble doit être aussi léger que possible, ce qui entraîne l'inconvénient de limiter la puissance de la génératrice. La plus forte puissance que l'on puisse obtenir avec cette technologie est de 275 kW, alors que le dispositif selon l'invention n'entraîne aucune limitation de ce genre et permet d'atteindre, voire dépasser, une hauteur de 120 m du mât.

Une autre solution pour protéger le rotor et la nacelle consiste à rendre le mât de l'éolienne télescopique de manière à pouvoir abaisser ces éléments vers le sol pour les démonter. Cependant, une telle solution est très difficile à mettre en oeuvre et extrêmement coûteuse.

Même si on connaît un grand nombre de dispositifs permettant l'assemblage d'une éolienne et le montage d'une nacelle et d'un rotor au sommet de celle-ci, ces dispositifs ne sont pas conçus pour permettre à n'importe quel moment le démontage rapide d'un rotor et d'une nacelle du mât d'une éolienne.

Tel est le cas du dispositif décrit dans le DE 197 41 988 qui concerne un ensemble grue-support utilisé pour l'assemblage d'une éolienne et qui peut être hissé segment par segment vers le haut à l'aide d'un câble accroché à un oeillet de retenue fixé près du bord supérieur de chaque segment. L'ensemble grue-support est retenu contre le mât par deux éléments en U entourant le mât et comprenant chacun une paire de bras de retenue. Ce dispositif peut difficilement être utilisé dans une situation d'urgence. Par ailleurs, ces moyens de levage à crochet et oeillet sans moyens de blocage dans une position haute ne sont pas fiables.

Un dispositif similaire est décrit dans le DE 196 47 515 qui présente les mêmes inconvénients.

Un autre dispositif destiné au montage d'une éolienne est connu du JP 11082285 qui décrit l'utilisation d'une grue "grimpante" se déplaçant vers le haut segment par segment. Cependant, ce dispositif est complexe et lourd et ne peut pas être utilisé pour le démontage rapide d'un rotor et d'une nacelle du mât d'une éolienne.

On connaît également des documents US 2002/171247 et US 4 311 434 des dispositifs de montage dépourvus de grue et qui comportent comme moyen de levage une plate-forme qui peut se déplacer le long du mât de l'éolienne. Cependant, ces dispositifs ne conviennent que pour les structures d'éolienne légères, généralement en treillis.

Par conséquent, il y a un très grand besoin dans les zones cycloniques d'un dispositif simple et efficace permettant le démontage rapide du rotor et de la nacelle de l'éolienne dès prévision d'un cyclone de la catégorie 2, 3 ou plus.

Le but de l'invention est de remédier à ce problème et aux inconvénients des dispositifs connus en proposant un dispositif de démontage rapide d'un rotor et d'une nacelle du mât d'une éolienne, ce dispositif étant en permanence disponible sur le site de l'éolienne de manière à pouvoir immédiatement procéder au démontage du rotor et de la nacelle pour les mettre à l'abri des vents cycloniques. Ce dispositif est en outre simple, fiable et facile d'utilisation.

Un objet de l'invention est un dispositif de démontage rapide d'un rotor et d'une nacelle du mât d'une éolienne, comprenant les caractéristiques de la revendication 1.

Selon d'autres caractéristiques du dispositif selon l'invention :
- ledit treuil est placé à l'intérieur du mât ;
- ledit treuil est un treuil modulaire apte à être fixé par des moyens de liaison rapide à un emplacement prévu à proximité du mât de chaque éolienne pourvue d'un dispositif du même genre, et que ledit câble s'étend par une ouverture dans la partie inférieure du mât pour d'abord passer sur une deuxième poulie de renvoi qui est fixée à demeure à l'intérieur du mât, dans la partie inférieure de celui-ci ;
- des moyens de butée sont prévus en haut et/ou en bas du mât afin d'arrêter ledit ensemble grue-support dans une position de blocage respectivement pour opérer la descente du rotor et de la nacelle et/ou dans une position de séparation dudit ensemble grue-support du mât ;

- lesdits rails présentent une forme en T afin de recevoir par complémentarité de formes des organes de retenue en forme de C prévus d'un côté dudit support ;
- lesdits moyens de blocage comportent des premiers organes de blocage prévus sur ledit support et aptes à coopérer avec des deuxièmes organes de blocage prévus sur ledit mât ;
- lesdits premiers et deuxièmes organes de blocage comportent des plaques faisant saillie de la périphérie dudit support respectivement dudit mât et qui sont pourvues de trous aptes à être alignés les uns sur les autres lorsque ledit support se trouve en haut du mât, et des tiges de verrouillage aptes à être introduites dans lesdits trous alignés ;
- lesdites tiges sont commandées par des moyens hydrauliques faisant partie d'un circuit hydraulique embarqué sur ledit support ;
- lesdits moyens de levage comportent un treuil disposé en bas dudit mât et dont un câble passe sur une première poulie de renvoi fixée à demeure en haut de celui-ci ;
- ledit ensemble grue-support comprend des moyens de commande de la grue comportant des moyens de télécommande permettant de commander à distance toutes les fonctions de la grue ;
- lesdits moyens de télécommande permettent en outre de commander à distance lesdits moyens de blocage dudit ensemble grue-support, au moins pour le déverrouillage de ceux-ci ;
- ledit ensemble grue-support est apte à être disposé sans désassemblage préalable sur un véhicule de transport afin d'être utilisé sur plusieurs éoliennes équipées dudit dispositif de démontage rapide.

Un autre objet de l'invention est une éolienne pourvue d'un tel dispositif.

L'invention a en outre pour objet un procédé de démontage rapide d'un rotor et d'une nacelle du mât d'une éolienne. Ce procédé est caractérisé par le fait qu'il comprend les phases comme définis dans la revendication 11.

Selon d'autres caractéristiques du procédé selon l'invention :
le procédé comprend en outre les phases consistant à :
   - libérer ledit ensemble grue-support desdits moyens de blocage pour le faire descendre vers le sol tout en gardant le rotor et la nacelle sur le sol ;
   - séparer ledit ensemble grue-support desdits rails de guidage.

Le procédé consiste en outre à :
- placer ledit ensemble grue-support sur un véhicule de transport ;
- transporter ledit ensemble grue-support devant au moins une autre éolienne du même genre et effectuer de la même manière le démontage du rotor et de la nacelle de celle-ci ;
et, après le temps nécessaire de séjour sur le sol du rotor et de la nacelle respectifs :
- remonter la nacelle et le rotor dans l'ordre inverse en transportant ledit ensemble grue-support entre les éoliennes ainsi démontées.

Selon le procédé, on utilise un treuil modulaire faisant partie desdits moyens de levage et apte à être fixé par des moyens de liaison rapide à un emplacement prévu à l'extérieur du mât de chaque éolienne du même genre, et en ce que l'on fixe à demeure une deuxième poulie de renvoi à l'intérieur du mât, dans la partie inférieure de celui-ci, et que l'on fait passer un câble dudit treuil modulaire par une ouverture en bas du mât.

Selon le procédé, toutes les opérations de la grue sont télécommandées.

D'autres caractéristiques et avantages de l'invention ressortiront de la description qui va suivre d'un mode de réalisation non limitatif de l'invention, en référence aux figures annexées dans lesquelles :
- la figure 1 est une vue latérale schématique montrant un mât d'éolienne pourvu du dispositif de démontage rapide selon l'invention qui comprend un ensemble grue-support en position basse ;
- la figure 2 est une vue latérale partielle montrant la disposition des rails de guidage en bas du mât de l'éolienne ;
- la figure 3 est une vue partielle en coupe montrant la partie inférieure du mât de l'éolienne et un treuil disposé à l'extérieur du mât ;
- la figure 4 est une vue partielle en perspective montrant l'ensemble grue-support selon l'invention engagé sur des rails fixés d'un côté du mât, ainsi qu'un treuil placé à l'extérieur du mât du côté opposé à cet ensemble grue-support ;
- la figure 5 est une vue partielle latérale montrant la partie haute du mât de l'éolienne avec la nacelle et l'ensemble grue-support en position haute ;
- la figure 6 est une vue en perspective montrant le support de grue et son dispositif de blocage et de guidage selon l'invention ;
- la figure 7 est une vue de dessus, partiellement en coupe, montrant le support de grue dans sa position haute et les moyens de blocage de l'ensemble grue-support dans cette position ;
- la figure 8 est une vue de dessus illustrant la position de la grue au début de l'opération de descente du rotor ;
- la figure 9 est une vue latérale illustrant la position de la grue au début de l'opération de démontage de la nacelle ;
- la figure 10 est une vue latérale, partiellement arrachée, illustrant schématiquement l'ensemble grue-support au début de son déplacement vers le haut et un treuil placé à l'intérieur du mât pour le levage de l'ensemble grue-support ;

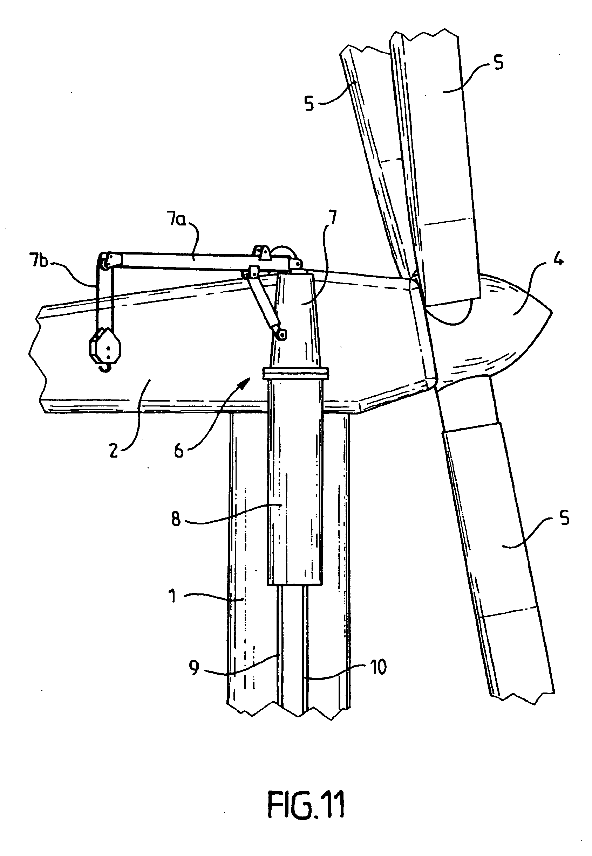

- la figure 11 est une vue latérale illustrant schématiquement l'ensemble grue-support en haut du mât avant le début du démontage du rotor ;

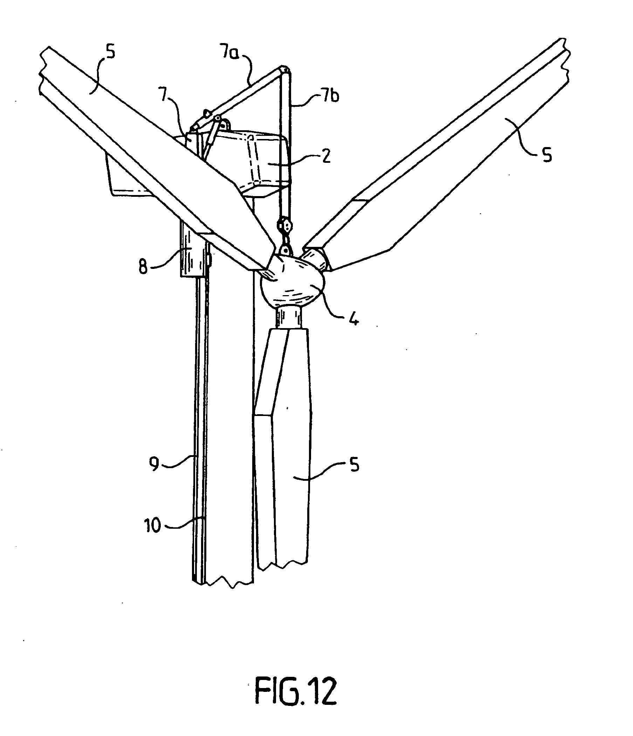

- la figure 12 est une vue en perspective illustrant schématiquement le rotor désolidarisé pour son abaissement sur le sol à l'aide de l'ensemble grue-support ;

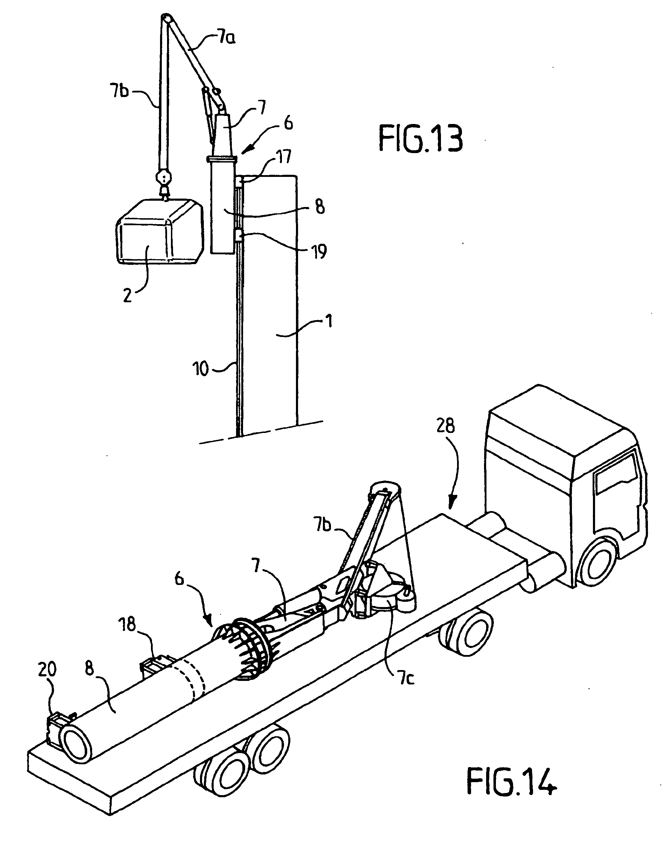

- la figure 13 est une vue similaire à la vue de la figure 12 illustrant schématiquement la nacelle désolidarisée pour son abaissement sur le sol à l'aide de l'ensemble grue-support ; et
- la figure 14 est une vue schématique en perspective illustrant l'ensemble grue-support disposé sur une remorque pour son déplacement.

Dans les figures, les éléments identiques ou équivalents porteront les mêmes signes de référence.

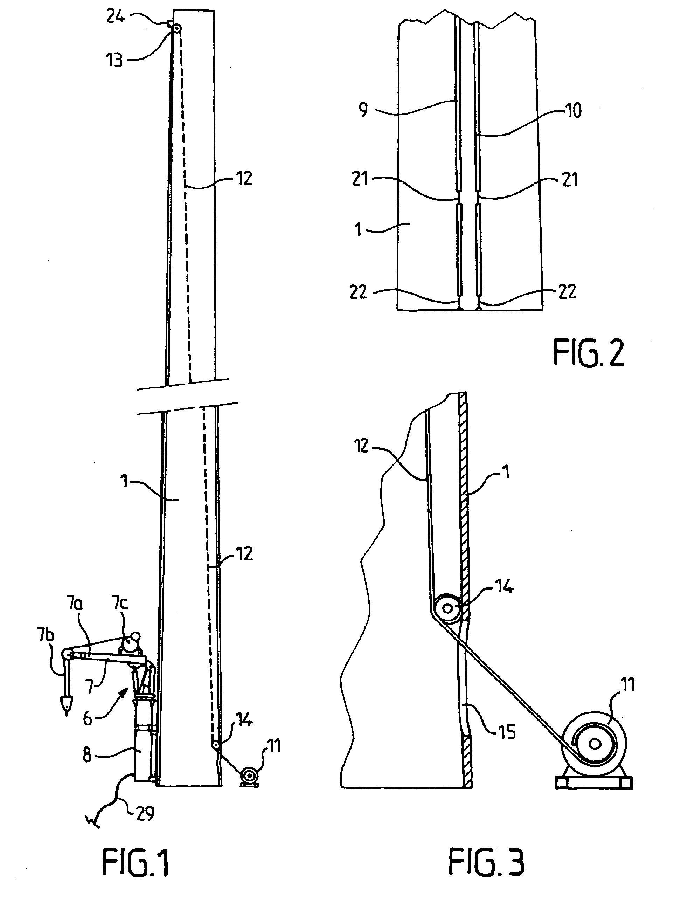

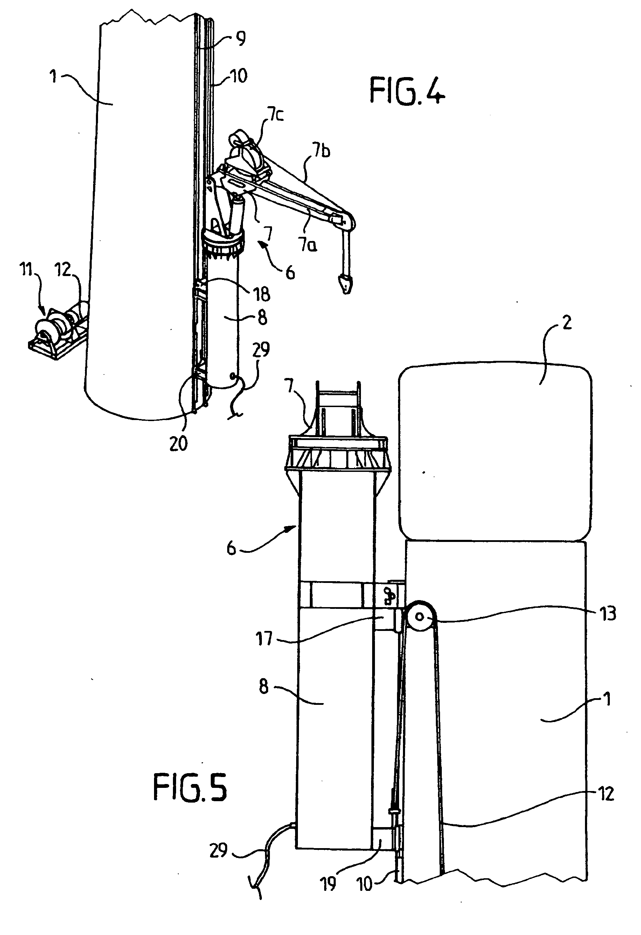

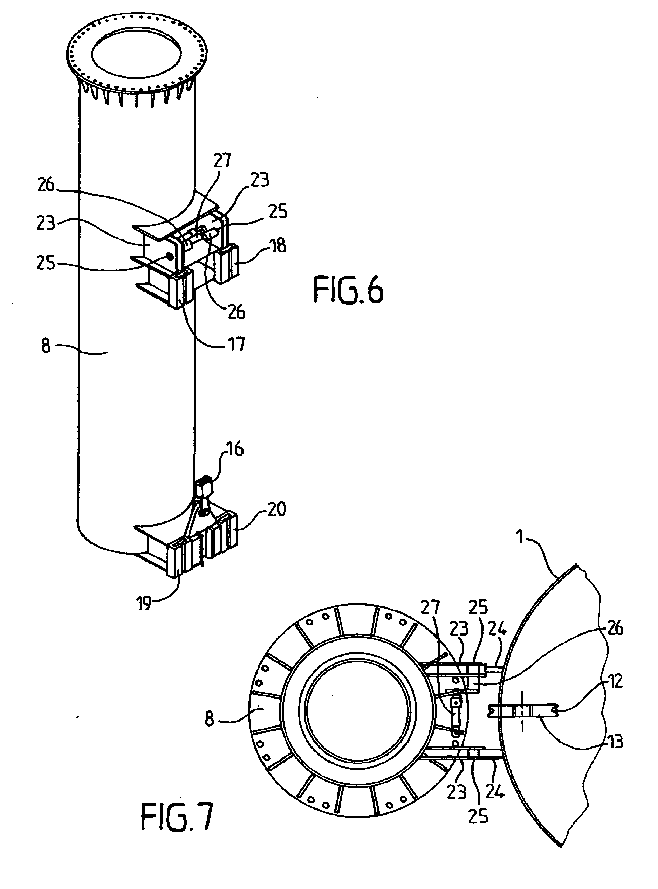

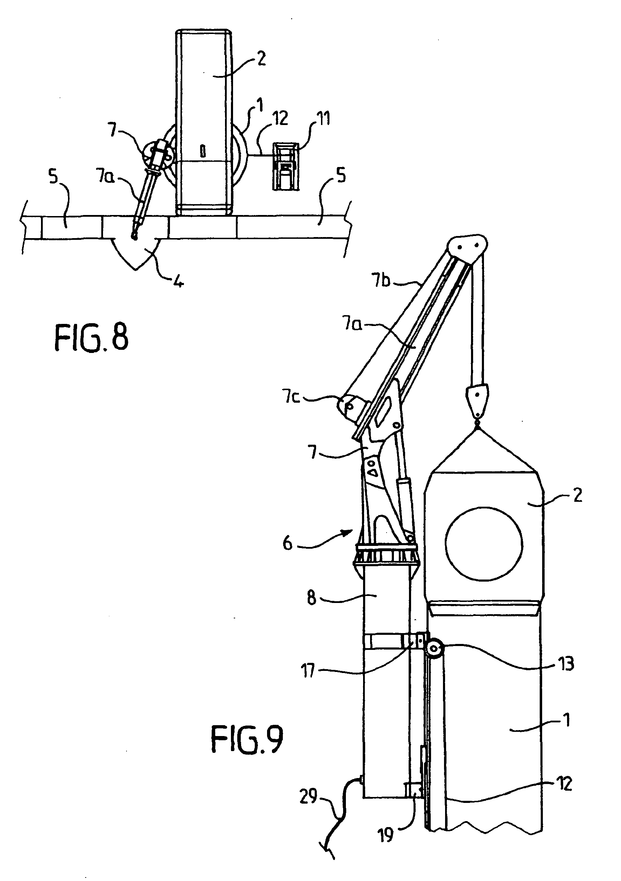

Les figures 1 à 9 montrent les éléments essentiels du dispositif de démontage rapide selon l'invention d'un rotor et d'une nacelle du mât d'une éolienne.

L'éolienne comporte de manière classique en soi un mât 1 portant une nacelle 2 dans laquelle une génératrice (non illustrée) est placée. La nacelle 2 est montée rotative sur une couronne d'orientation (non illustrée). L'arbre de la génératrice est relié à un rotor 3 de l'éolienne, plus précisément à un moyeu 4 sur lequel les pales 5 du rotor sont fixées. Tous ces éléments sont bien connus dans ce domaine technique et comme ils ne se rapportent pas directement à l'invention, ils ne seront pas décrits plus en détail ici.

La figure 1 montre un mât d'éolienne 1 associé à un dispositif de démontage rapide selon l'invention. Ce dispositif comprend un ensemble 6 formé par une grue 7 montée pivotante sur un support 8. La grue 7 comporte une flèche 7a montée basculante et portant un câble de levage 7b embobiné sur un tambour 7c disposé à l'extrémité arrière de la flèche.

Le support 8 est apte à coulisser le long du mât 1 sur des rails de guidage parallèles 9, 10 fixés à demeure d'un côté du mât 1. Ces rails de guidage permettent à l'ensemble grue-support 6 de se déplacer le long du mât 1 à l'aide de moyens de levage.

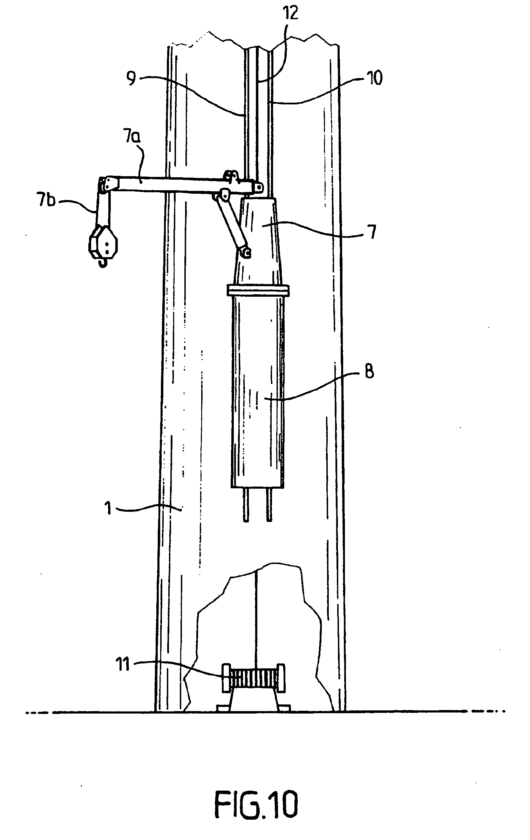

Ces moyens de levage comprennent un treuil 11 qui dans la variante illustrée sur les figures 1, 3, 4 et 8 est disposé à l'extérieur du mât 1, alors que dans la variante illustrée à la figure 10, il est disposé à l'intérieur de celui-ci.

L'ensemble grue-support 6 est relié au treuil 11 par un câble 12 qui passe sur une première poulie 13 disposé en haut du mât 1. Dans la variante où le treuil est placé à l'extérieur, le câble passe sur une deuxième poulie 14 en s'étendant par une ouverture 15 aménagée en bas du mât 1. Bien entendu, il est possible de prévoir encore une poulie de renvoi en haut de sorte que le câble descende à peu près parallèlement à l'axe du mât 1.

Le point d'attache 16 du câble 12 sur l'ensemble grue-support 6 se trouve en bas du support 8.

Les rails 9, 10 présentent avantageusement une forme en T afin de recevoir par complémentarité de formes deux paires d'organes de retenue 17 à 20 en forme de C prévus d'un côté du support de grue 8.

Sur la partie basse du mât 1, les rails présentent des interruptions formées par deux paires d'espaces libres 21, 22 permettant d'engager les organes de retenues 17 à 20 sur les rails et par la suite de libérer ces organes de ceux-ci.

Le dispositif de démontage rapide selon l'invention comporte en outre des moyens de blocage de l'ensemble grue-support 6 en haut du mât 1. Ces moyens de blocage comportent des premiers organes de blocage prévus sur le support de grue 8 et des deuxièmes organes de blocage 24 prévus sur le mât 1.

Ces premiers et deuxièmes organes de blocage 23, 24 comportent des plaques faisant saillie de la périphérie du support 8 respectivement du mât 1. Ces plaques sont pourvues de trous 25 aptes à être alignés les uns sur les autres lorsque le support de grue 8 se trouve en haut du mât 1 afin de recevoir des tiges de verrouillage 26.

Les tiges de verrouillage 26 sont commandées par des moyens hydrauliques sous forme de vérins hydrauliques 27 faisant partie d'un circuit hydraulique (non représenté) embarqué dans le support de grue 8.

L'ensemble grue-support 6 comprend des moyens de commande de la grue 7 comportant avantageusement des moyens de télécommande (non représentés) permettant de commander à distance toutes les fonctions de la grue 7 à partir du sol.

Ces moyens de télécommande permettent en outre de commander à distance les moyens de blocage 23, 24, 26 de l'ensemble grue-support 6, au moins pour le déverrouillage de ces moyens de blocage. Par contre, le verrouillage par les tiges de verrouillage 26 peut être déclenché automatiquement lorsque l'ensemble grue-support 6 vient en haut et y est arrêté par des moyens de butée (non représentés) sur le mât 1 qui arrêtent l'ensemble dans une position dans laquelle les trous 25 recevant les tiges 26 sont alignés les uns sur les autres.

D'autres moyens de butée (non représentés) peuvent également être prévus en bas du mât pour arrêter l'ensemble grue-support 6 dans une position dans laquelle les organes de retenue 17 à 20 de l'ensemble peuvent être libérés des rails 9, 10.

L'ensemble grue-support 6 est avantageusement apte à être disposé sur un véhicule de transport 28 sans désassemblage préalable de l'ensemble grue-support. La flèche 7a de la grue 7 peut dans ce cas faire légèrement saillie de la plate-forme du véhicule de transport. De cette manière, l'ensemble grue-support 6 peut être déplacé pour être utilisé sur plusieurs éoliennes équipées du dispositif de démontage selon l'invention.

Selon une variante, le treuil 11 constitue un treuil modulaire apte à être fixé par des moyens de liaison rapide à un emplacement prévu à proximité du mât 1 de chaque éolienne pourvue d'un dispositif de démontage selon l'invention. Le treuil 11 peut ainsi être libéré de ses moyens de liaison pour être transporté avec l'ensemble grue-support 6 afin d'être utilisé sur plusieurs éoliennes.

Par ailleurs, les moyens hydrauliques embarqués dans le support de grue 8 sont à leur tour alimentés électriquement par l'intermédiaire d'un câble électrique 29 présentant une longueur suffisante pour relier l'ensemble grue-support 6 à une source électrique (non représentée) se trouvant au niveau du sol.

Le dispositif de démontage rapide d'un rotor et d'une nacelle du mât d'une éolienne fonctionne selon l'invention de la manière suivante.

Suite à une prévision de cyclone fort qui est susceptible d'endommager le rotor 3 et la nacelle 2 d'une éolienne pourvue de rails de guidage 9, 10 fixés à demeure d'un côté du mât 1 et aptes à guider un ensemble 6 formé par une grue 7 montée sur un support 8, de moyens de levage 11 à 14 au moins partiellement intégrés dans le mât 1 de l'éolienne, et de moyens de blocage 23 à 26 de l'ensemble grue-support 6 en haut du mât 1, on transporte d'abord l'ensemble grue- support 6 devant l'éolienne en question.

Ensuite, l'ensemble grue-support 6 est engagé sur les rails 9, 10 et relié au treuil 11 par le câble 12 passant sur la première poulie 13 disposée en haut du mât. Le treuil 11 peut être fixé sur le sol à proximité du mât 1, ou bien être monté à demeure à l'intérieur de celui-ci. Dans le premier cas, il faut prévoir une deuxième poulie 14 en bas du mât 1 et une ouverture 15 en bas de celui-ci pour le passage du câble 12. Le treuil peut être un treuil modulaire pouvant être utilisé sur plusieurs éoliennes équipées de la même manière.

L'ensemble grue-support 6 est ensuite hissé en haut du mât et bloqué en position de travail en haut du mât.

Par la suite, la flèche 7a de la grue 7 est placée au-dessus du rotor 3 et reliée à celui-ci par un câble 7b de la flèche 7. Le rotor 3 est ensuite désolidarisé de la nacelle 2 pour être abaissé et posé sur le sol.

La nacelle 2 est ensuite démontée de la même manière pour être posée sur le sol. L'ensemble grue-support 6 peut ensuite être descendu vers le sol et libéré des rails de guidage 9, 10.

Le rotor 3, la nacelle 2 et l'ensemble grue-support lui-même 6 peuvent ainsi être transportés sur un véhicule de transport 28 à un endroit sûr pour être mis à l'abri du cyclone.

Les opérations de la grue 7 en haut du mât peuvent être télécommandées à partir du sol.

L'ensemble des opérations de démontage du rotor 3 et de la nacelle 2 d'une éolienne prennent environ 24 heures, ce qui veut dire qu'en général on a le temps de démonter le rotor 3 et la nacelle 2 de trois ou quatre éoliennes prééquipées du dispositif de démontage selon l'invention.

Dans le cas d'un parc d'éoliennes comprenant un nombre plus important d'éoliennes (>4), il est nécessaire de disposer de plusieurs ensembles grue-support 6 et de préférence de plusieurs véhicules de transport 28 ou remorques pour le démontage simultané de plusieurs éoliennes.

Grâce à l'invention, il est ainsi possible de démonter rapidement le rotor et la nacelle de plusieurs éoliennes qui sont susceptibles d'être exposées à un risque majeur à cause d'un cyclone fort qui se prépare. Contrairement à ce qui est actuellement le cas, on n'a plus besoin d'une très puissante grue pour ce démontage et de toute manière, une telle grue n'est en général pas immédiatement disponible pour effectuer ce démontage qui doit être fait dans un laps de temps extrêmement court. L'invention permet de commencer le démontage dès qu'il y a une prévision de cyclone fort, même dans le cas où les éoliennes sont installées dans des régions montagneuses ou sur des îles ou dans d'autres endroits difficiles d'accès.

Par ailleurs, il est évident que le dispositif de démontage selon l'invention peut également être utile pour des travaux de maintenance et de réparation ; dans ce cas, l'ensemble grue-support 6 peut bien évidemment rester dans sa position bloquée en haut du mât 1 le temps nécessaire pour ces travaux.

Le dispositif de démontage selon l'invention pourra également être utilisé lors de la dernière phase d'assemblage d'une éolienne afin de mettre en place la nacelle 2 au sommet du mât 1 et ensuite le rotor 3 sur celle-ci. La hauteur de l'éolienne est ainsi sans importance et grâce au dispositif selon l'invention, il est possible d'atteindre des hauteurs encore plus importantes.

L'invention apporte également un autre avantage économique puisque le coût du dispositif de l'invention est nettement inférieur au coût d'achat d'une grue de forte capacité.

Les coûts d'immobilisation du matériel en cas d'intempérie ou de conditions météorologiques difficiles sont également réduits.

## Revendications

1. Dispositif de démontage rapide d'un rotor (3) et d'une nacelle (2) du mât (1) d'une éolienne, comprenant un ensemble grue-support (6) formé par une grue (7) montée sur un support (8), ledit ensemble grue-support (6) étant apte à se déplacer le long du mât (1) à l'aide de moyens de levage (11 à 14), et des moyens de blocage (23 à 26) dudit ensemble grue-support (6) en haut du mât (1), ledit ensemble grue-support (6) étant apte à coulisser sur des rails de guidage (9, 10) fixés à demeure d'un côté du mât, lesdits moyens de levage (11 à 14) étant au moins partiellement intégrés dans celui-ci et comportent un treuil (11) disposé en bas dudit mât (1) et dont un câble (12) passe sur une première poulie de renvoi (13) fixée à demeure en haut de celui-ci, lesdits moyens de blocage (23 à 26) comportant des premiers organes de blocage (23) prévus sur ledit support (8) et aptes à coopérer avec des deuxièmes organes de blocage (24) prévus sur ledit mât (1), **caractérisé par le fait que** lesdits premiers et deuxièmes organes de blocage (23, 24) comportent des plaques faisant saillie de la périphérie dudit support respectivement dudit mât et qui sont pourvues de trous (25) aptes à être alignés les uns sur les autres lorsque ledit support (8) se trouve en haut du mât, et des tiges de verrouillage (26) aptes à être introduites dans lesdits trous alignés (25).

2. Dispositif selon la revendication 1, **caractérisé par le fait que** lesdites tiges de verrouillage (26) sont commandées par des moyens hydrauliques faisant partie d'un circuit hydraulique embarqué sur ledit support (8).

3. Dispositif selon la revendication 1 ou 2, **caractérisé par le fait que** des moyens de butée sont prévus en haut et/ou en bas du mât (1) afin d'arrêter ledit ensemble grue-support (6) dans une position de blocage respectivement pour opérer la descente du rotor (3) et de la nacelle (2) et/ou dans une position de séparation dudit ensemble grue-support (6) du mât (1).

4. Dispositif selon l'une quelconque des revendications précédentes, **caractérisé par le fait que** lesdits rails (9, 10) présentent une forme en T afin de recevoir par complémentarité de formes des organes de retenue (17 à 20) en forme de C prévus d'un côté dudit support (8).

5. Dispositif selon l'une quelconque des revendications précédentes, **caractérisé par le fait que** ledit treuil (11) est placé à l'intérieur du mât (1).

6. Dispositif selon l'une quelconque des revendications 1 à 4, **caractérisé par le fait que** ledit treuil (11) est un treuil modulaire apte à être fixé par des moyens de liaison rapide à un emplacement prévu à proximité du mât (1) de chaque éolienne pourvue d'un dispositif du même genre, et en ce que ledit câble (12) s'étend par une ouverture (15) dans la partie inférieure du mât (1) pour d'abord passer sur une deuxième poulie de renvoi (14) qui est fixée à demeure à l'intérieur du mât (1), dans la partie inférieure de celui-ci.

7. Dispositif selon l'une quelconque des revendications précédentes, **caractérisé par le fait que** ledit ensemble grue-support (6) comprend des moyens de commande de la grue (7) comportant des moyens de télécommande permettant de commander à distance toutes les fonctions de la grue.

8. Dispositif selon la revendication 7, **caractérisé par le fait que** lesdits moyens de télécommande permettent en outre de commander à distance lesdits moyens de blocage (23 à 26) dudit ensemble grue-support (6), au moins pour le déverrouillage de ceux-ci.

9. Dispositif selon l'une quelconque des revendications précédentes, **caractérisé par le fait que** ledit ensemble grue-support (6) est apte à être disposé sans désassemblage préalable sur un véhicule de transport (28) afin d'être utilisé sur plusieurs éoliennes équipées dudit dispositif de démontage rapide.

10. Eolienne, **caractérisée par le fait qu'**elle est pourvue d'un dispositif selon l'une quelconque des revendications précédentes.

11. Procédé de démontage rapide d'un rotor (3) et d'une nacelle (2) du mât (1) d'une éolienne, **caractérisé par le fait qu'**il comprend les phases consistant à :
- prévoir sur l'éolienne lors de la construction de celle-ci des rails de guidage (9, 10) fixés à demeure d'un côté du mât (1) et aptes à guider un ensemble grue-support (6) formé par une grue (7) montée sur un support (8) ;
- intégrer dans le mât (1), au moins partiellement, des moyens de levage (11 à 14) dudit ensemble grue-support comprenant un treuil (11) disposé en bas dudit mât (1) et dont un câble passe sur une première poulie de renvoi (13) fixée à demeure en haut du mât (1) ;
- prévoir des moyens de blocage (23 à 26) dudit ensemble grue-support (6) en haut du mât (1), lesdits moyens de blocage (23 à 26) comportant des premiers organes de blocage (23) prévus sur ledit support (8) et aptes à coopérer avec des deuxièmes organes de blocage (24) prévus sur ledit mât (1);
- prévoir que lesdits premiers et deuxièmes organes de blocage (23, 24) comportent des plaques faisant saillie de la périphérie dudit support respectivement dudit mât et qui sont pourvues de trous (25) aptes à être alignés les uns sur les autres lorsque ledit support (8) se trouve en haut du mât, et des tiges de verrouillage (26) aptes à être introduites dans lesdits trous alignés (25),
et lors dudit démontage rapide du rotor (3) et de la nacelle (2) :
- connecter ledit ensemble grue-support (6) auxdits rails de guidage (9, 10) en bas du mât (1) ;
- hisser ledit ensemble grue-support (6) en haut du mât (1) à l'aide desdits moyens de levage (11 à 14) ;
- bloquer ledit ensemble grue-support (6) en haut du mât (1) à l'aide desdits moyens de blocage (23 à 26) ;
- placer la flèche (7a) de la grue (7) au-dessus du rotor (3) et relier celui-ci à un câble (7b) de la flèche ;
- désolidariser le rotor (3) de la nacelle (2) et le descendre à l'aide de la grue (7) pour le poser sur le sol ;
- placer la flèche (7a) de la grue (7) au-dessus de la nacelle (2) et relier celle-ci au câble (12) de la flèche (7a) ;
- désolidariser la nacelle (2) du mât (1) et le descendre à l'aide de la grue (7) pour la poser sur le sol ;
et, après le temps nécessaire de séjour sur le sol du rotor (3) et de la nacelle (2) :
- remonter la nacelle (2) et le rotor (3) à l'aide de la grue (7) dans l'ordre inverse.

12. Procédé de démontage rapide d'un rotor (3) et d'une nacelle (2) du mât (1) d'une éolienne selon la revendication 11, **caractérisé par le fait qu'**il comprend en outre les phases consistant à :
- libérer ledit ensemble grue-support (6) desdits moyens de blocage (23 à 26) pour le faire descendre vers le sol tout en gardant le rotor (3) et la nacelle (2) sur le sol ;
- séparer ledit ensemble desdits rails de guidage (9, 10).

13. Procédé de démontage rapide d'un rotor (3) et d'une nacelle (2) du mât (1) d'une éolienne selon la revendication 12, **caractérisé par le fait qu'**il consiste en outre à :
- placer ledit ensemble grue-support (6) sur un véhicule de transport (28) ;
- transporter ledit ensemble grue-support (6) devant au moins une autre éolienne équipée du même dispositif de démontage rapide et effectuer de la même manière le démontage du rotor (3) et de la nacelle (2) de celle-ci ;
et, après le temps nécessaire de séjour sur le sol du rotor (3) et de la nacelle (2) respectifs :
- remonter la nacelle (2) et le rotor (3) dans l'ordre inverse en transportant ledit ensemble grue-support (6) entre les éoliennes ainsi démontées.

14. Procédé de démontage rapide d'un rotor (3) et d'une nacelle (2) du mât (1) d'une éolienne selon l'une quelconques des revendications 11 à 13, **caractérisé par le fait que** l'on utilise un treuil modulaire (11) faisant partie desdits moyens de levage (11 à 14) et apte à être fixé par des moyens de liaison rapide à un emplacement prévu à l'extérieur du mât (1) de chaque éolienne du même genre, et en ce que l'on fixe à demeure une deuxième poulie de renvoi (14) à l'intérieur du mât (1), dans la partie inférieure de celui-ci, et que l'on fait passer un câble (12) dudit treuil modulaire (11) par une ouverture (15) en bas du mât (1).

15. Procédé de démontage rapide d'un rotor (3) et d'une nacelle (2) du mât (1) d'une éolienne selon l'une quelconque des revendications 11 à 14, **caractérisé par le fait que** toutes les opérations de la grue (7) sont télécommandées.

## Claims

1. A device for quickly disassembling a rotor (3) and a nacelle (2) of the mast (1) of a wind turbine, comprising a crane-support assembly (6) formed by a crane (7) mounted on a support (8), said crane-support assembly (6) being able to move along the mast (1) using lifting means (11 to 14), and blocking means (23 to 26) for said crane-support assembly (6) at the top of the mast (1), said crane-support assembly (6) being able to slide on guide rails (9, 10) permanently fastened on one side of the mast, said lifting means (11 to 14) being at least partially integrated therein and having a winch (11) arranged at the bottom of said mast (1) and whereof a cable (12) passes over a first return pulley (13) permanently fastened at the top thereof, said blocking means (23 to 26) having first blocking members (23) provided on said support (8) and able to cooperate with second blocking members (24) provided on said mast (1), **characterized in that** said first and second blocking members (23, 24) have plates protruding from the periphery of said support and said mast, respectively, and which are provided with holes (25) that can be aligned on one another when said support (8) is at the top of the mast, and locking rods (26) that can be inserted into said aligned holes (25).

2. The device according to claim 1, **characterized in that** said locking rods (26) are controlled by hydraulic means that are part of a hydraulic system onboard said support (8).

3. The device according to claim 1 or 2, **characterized in that** stop means are provided at the top and/or bottom of the mast (1) so as to stop said crane-support assembly (6) in a blocking position respectively to lower the rotor (3) and the nacelle (2) and/or in a position separating said crane-support assembly (6) from the mast (1).

4. The device according to any one of the preceding claims, **characterized in that** said rails (9, 10) are T-shaped so as to receive C-shaped retaining members (17 to 20) that are provided on one side of said support (8) through complementary shapes.

5. The device according to any one of the preceding claims, **characterized in that** said winch (1) is placed inside the mast (1).

6. The device according to any one of claims 1 to 4, **characterized in that** said winch (11) is a configurable winch that can be fastened by quick connection means at a location provided near the mast (1) of each wind turbine provided with a device of the same type and **in that** said cable (12) extends through an opening (15) in the lower portion of the mast (1) to first pass over a second return pulley (14) that is fastened permanently to the inside of said mast (1), in the lower portion thereof.

7. The device according to any one of the preceding claims, **characterized in that** said crane-support assembly (6) comprises means for controlling the crane (7) having remote control means making it possible to control all of the functions of the crane remotely.

8. The device according to claim 7, **characterized in that** said remote control means also make it possible to control said blocking means (23 to 26) of said crane-support assembly (6) remotely, at least to unlock them.

9. The device according to any one of the preceding claims, **characterized in that** said crane-support assembly (6) can be arranged without prior disassembly on a carrier vehicle (28) so as to be used on several wind turbines equipped with the quick disassembly device.

10. A wind turbine, **characterized in that** it is provided with a device according to any one of the preceding claims.

11. A method for quickly disassembling a rotor (3) and a nacelle (2) from the mast (1) of a wind turbine, **characterized in that** it comprises the following phases:
- providing, on the wind turbine during the construction thereof, guide rails (9, 10) permanently fastened on one side of the mast (1) and capable of guiding a crane-support assembly (6) formed by a crane (7) mounted on a support (8);
- at least partially integrating, into the mast (1), means (11 to 14) for lifting said crane-support assembly comprising a winch (11) arranged in the lower portion of said mast (1) and whereof a cable passes over a first return pulley (13) permanently fastened at the top of the mast(1):
- providing blocking means (23 to 26) for said crane-support assembly (6) at the top of the mast (1), said blocking means (23 to 26) having first blocking members (23) provided on said support (8) and able to cooperate with second blocking members (24) provided on said mast (1);
- providing that said first and second blocking members (23, 24) have plates protruding from the periphery of said support and the mast, respectively, and which are provided with holes (25) that can be aligned on one another when said support (8) is at the top of the mast, and locking rods (26) that can be inserted into said aligned holes (25),
and during said quick disassembly of the rotor (3) and the nacelle (2):
- connecting said crane-support assembly (6) to said guide rails (9, 10) at the bottom of the mast (1);
- raising said crane-support assembly (6) to the top of the mast (1) using said lifting means (11 to 14);
- blocking said crane-support assembly (6) at the top of the mast (1) using said blocking means (23 to 26);
- placing the boom (7a) of the crane (7) above the rotor (3) and connecting it to a cable (7b) of the boom;
- separating the rotor (3) from the nacelle (2) and lowering it using the crane (7) to place it on the ground;
- placing the boom (7a) of the crane (7) above the nacelle (2) and connecting it to the cable (12) of the boom (7a);
- separating the nacelle (2) from the mast (1) and lowering it using the crane (7) to place it on the ground;
and, after the necessary residence time of the ground of the rotor (3) and the nacelle (2):
- raising the nacelle (2) and the rotor (3) using the crane (7) in the opposite order.

12. The method for quickly disassembling a rotor (3) and a nacelle (2) from the mast (1) of a wind turbine according to claim 11, **characterized in that** it also comprises the following phases:
- releasing said crane-support assembly (6) from said blocking means (23 to 26) to lower it toward the ground while keeping the rotor (3) and the nacelle (2) on the ground;
- separating said assembly from said guide rails (9, 10).

13. The method for quickly disassembling a rotor (3) and a nacelle (2) from the mast (1) of a wind turbine according to claim 12, **characterized in that** it also consists of:
- placing said crane-support assembly (6) on a carrier vehicle (28);
- transporting said crane-support assembly (6) in front of at least one other wind turbine equipped with the same quick disassembly device and disassembling the rotor (3) and the nacelle (2) therefrom in the same way;
and after the necessary residence time of the ground of the rotor (3) and the nacelle (2), respectively:
- raising the nacelle (2) and the rotor (3) in the opposite order while transporting said crane-support assembly (6) between the wind turbines thus disassembled.

14. The method for quickly disassembling a rotor (3) and a nacelle (2) from the mast (1) of a wind turbine according to one of claims 11 to 13, **characterized in that** a modular winch (11) is used that is part of said lifting means (11 to 14) and that is able to be fastened using quick connection means to a location provided on the outside of the mast (1) of each wind turbine of the same type, and **in that** a second return pulley (14) is permanently fastened to the inside of the mast (1), in the lower portion thereof, and a cable (12) of said modular winch (11) is passed through an opening (15) at the bottom of the mast (1).

15. The method for quickly disassembling a rotor (3) and a nacelle (2) from the mast (1) of a wind turbine according to any one of claims 11 to 14, **characterized in that** all of the operations of the crane (7) are remotely controlled.

## Patentansprüche

1. Schnelldemontagevorrichtung eines Rotors (3) und einer Gondel (2) des Masts (1) einer Windkraftanlage, die eine Kran-Träger-Gruppe (6), die von einem Kran (7) gebildet wird, der auf einem Träger (8) montiert ist, wobei die Kran-Träger-Gruppe (6) imstande ist, sich entlang des Masts (1) mit Hilfe von Hubmitteln (11 bis 14) zu bewegen, und Blockiermittel (23 bis 26) der Kran-Träger-Gruppe (6) oben am Mast (1) umfasst, wobei die Kran-Träger-Gruppe (6) imstande ist, auf dauerhaft an einer Seite des Masts befestigten Führungsschienen (9, 10) zu gleiten, wobei die Hubmittel (11 bis 14) mindestens teilweise in diesen integriert sind und eine Winde (11) aufweisen, die unten am Mast (1) angeordnet ist und von der ein Kabel (12) über eine erste Umlenkrolle (13) läuft, die dauerhaft oben an ihm befestigt ist, wobei die Blockiermittel (23 bis 26) erste Blockierorgane (23) umfassen, die auf dem Träger (8) vorgesehen sind und imstande, mit zweiten Blockierorganen (24) zusammenzuarbeiten, die auf dem Mast (1) vorgesehen sind, **dadurch gekennzeichnet, dass** die ersten und zweiten Blockierorgane (23, 24) Platten aufweisen, die über den Umfang des Trägers beziehungsweise des Masts hervorstehen und die mit Löchern (25) ausgestattet sind, die imstande sind, in einer Reihe ausgerichtet zu werden, wenn sich der Träger (8) oben am Mast befindet, und mit Verriegelungsstangen (26), die imstande sind, in die ausgerichteten Löcher (25) eingeführt zu sein.

2. Vorrichtung nach Anspruch 1, **dadurch gekennzeichnet, dass** die Verriegelungsstangen (26) von hydraulischen Mitteln gesteuert werden, die Teil eines in den Träger (8) eingebauten Hydraulikkreises sind.

3. Vorrichtung nach Anspruch 1 oder 2, **dadurch gekennzeichnet, dass** Anschlagmittel oben und/oder unten am Mast (1) vorgesehen sind, um die Kran-Träger-Gruppe (6) in einer Blockierstellung festzustellen beziehungsweise um den Rotor (3) und die Gondel (2) herabzulassen und/oder in einer Trennstellung der Kran-Träger-Gruppe (6) des Masts (1).

4. Vorrichtung nach einem der vorangehenden Ansprüche, **dadurch gekennzeichnet, dass** die Schienen (9, 10) eine T-Form aufweisen, um durch Formkomplementarität C-förmige Halteorgane (17 bis 20) aufzunehmen, die auf einer Seite des Trägers (8) vorgesehen sind.

5. Vorrichtung nach einem der vorangehenden Ansprüche, **dadurch gekennzeichnet, dass** die Winde (11) im Mast (1) platziert ist.

6. Vorrichtung nach einem der Ansprüche 1 bis 4, **dadurch gekennzeichnet, dass** die Winde (11) eine modulare Winde ist, die imstande ist, durch Schnellverbindungsmittel an einer Stelle in der Nähe des Masts (1) jeder Windkraftanlage, die mit einer Vorrichtung derselben Art ausgestattet ist, befestigt zu sein, und dadurch, dass sich das Kabel (12) durch eine Öffnung (15) in den inneren Abschnitt des Masts (1) erstreckt, um zunächst über eine zweite Umlenkrolle (14) zu laufen, die dauerhaft im Mast (1) im unteren Abschnitt desselben befestigt ist.

7. Vorrichtung nach einem der vorangehenden Ansprüche, **dadurch gekennzeichnet, dass** die Kran-Träger-Gruppe (6) Steuermittel des Krans (7) umfasst, die Fernsteuermittel aufweisen, die es erlauben, alle Funktionen des Krans fernzusteuern.

8. Vorrichtung nach Anspruch 7, **dadurch gekennzeichnet, dass** die Fernsteuermittel ferner erlauben, die Blockiermittel (23 bis 26) der Kran-Träger-Gruppe (6) fernzusteuern, zumindest zum Entriegeln derselben.

9. Vorrichtung nach einem der vorangehenden Ansprüche, **dadurch gekennzeichnet, dass** die Kran-Träger-Gruppe (6) imstande ist, ohne vorherige Demontage auf einem Transportfahrzeug (28) verladen zu werden, um auf mehreren Windkraftanlagen verwendet zu werden, die mit der Schnelldemontagevorrichtung ausgestattet sind.

10. Windkraftanlage, **dadurch gekennzeichnet, dass** sie mit einer Vorrichtung nach einem der vorangehenden Ansprüche ausgestattet ist.

11. Schnelldemontageverfahren eines Rotors (3) und einer Gondel (2) des Masts (1) einer Windkraftanlage, **dadurch gekennzeichnet, dass** es die Phasen umfasst, die bestehen im:
- Montieren auf der Windkraftanlage beim Bau derselben von Führungsschienen (9, 10), die dauerhaft auf einer Seite des Mast (1) befestigt sind und imstande, eine Kran-Träger-Gruppe (6) zu führen, die von einem auf einem Träger (8) aufgestellten Kran (7) gebildet wird,
- zumindest teilweises Integrieren von Hubmitteln (11 bis 14) der Kran-Träger-Gruppe in den Mast, (1), die eine unten am Mast (1) angeordnete Winde (11) umfassen, von der ein Kabel über eine erste Umlenkrolle (13) läuft, die dauerhaft oben am Mast (1) befestigt ist,
- Vorsehen der Blockiermittel (23 bis 26) der Kran-Träger-Gruppe (6) oben am Mast (1), wobei die Blockiermittel (23 bis 26) erste Blockierorgane (23) aufweisen, die auf dem Träger (8) vorgesehen sind und imstande, mit zweiten Blockiermitteln (24) zusammenzuarbeiten, die auf dem Mast (1) vorgesehen sind,
- Vorsehen, dass die ersten und zweiten Blockierorgane (23, 24) Platten aufweisen, die über den Umfang des Trägers beziehungsweise des Masts hervorstehen und die mit Löchern (25) ausgestattet sind, die imstande sind, in einer Reihe ausgerichtet zu sein, wenn sich der Träger (8) oben am Mast befindet, und mit Verriegelungsstangen (26), die imstande sind, in die ausgerichteten Löcher (25) eingeführt zu sein,
und bei der Schnelldemontage des Rotors (3) und der Gondel (2):
- Verbinden der Kran-Träger-Gruppe (6) mit den Führungsschienen (9, 10) unten am Mast (1),
- Hissen der Kran-Träger-Gruppe (6) hoch auf den Mast (1) mit Hilfe der Hubmittel (11 bis 14),
- Blockieren der Kran-Träger-Gruppe (6) oben am Mast (1) mit Hilfe der Blockiermittel (23 bis 26),
- Platzieren des Auslegers (7a) des Krans (7) über dem Rotor (3) und Verbinden desselben mit einem Kabel (7b) des Auslegers,
- Trennen des Rotors (3) von der Gondel (2) und Herablassen mit Hilfe des Krans (7), um ihn auf dem Boden abzustellen,
- Platzieren des Auslegers (7a) des Krans (7) über der Gondel (2) und Verbinden derselben mit dem Kabel (12) des Auslegers (7a),
- Trennen der Gondel (2) vom Mast (1) und Herablassen mit Hilfe des Krans (7), um sie auf dem Boden abzustellen,
und, nach der notwendigen Verweilzeit des Rotors (3) und der Gondel (2) auf dem Boden:
- erneutes Hochfahren der Gondel (2) und des Rotors (3) mit Hilfe des Krans (7) in umgekehrter Reihenfolge.

12. Schnelldemontageverfahren eines Rotors (3) und einer Gondel (2) des Masts (1) einer Windkraftanlage nach Anspruch 11, **dadurch gekennzeichnet, dass** es ferner die Phasen umfasst, die bestehen im:
- Lösen der Kran-Träger-Gruppe (6) von den Blockiermitteln (23 bis 26), um sie auf den Boden herunterzufahren, wobei der Rotor (3) und die Gondel (2) auf dem Boden verbleiben,
- Trennen der Gruppe von den Führungsschienen (9, 10).

13. Schnelldemontageverfahren eines Rotors (3) und einer Gondel (2) des Masts (1) einer Windkraftanlage nach Anspruch 12, **dadurch gekennzeichnet, dass** es ferner besteht im:
- Platzieren der Kran-Träger-Gruppe (6) auf einem Transportfahrzeug (28),
- Transportieren der Kran-Träger-Gruppe (6) zu mindestens einer anderen Windkraftanlage, die mit derselben Schnelldemontagevorrichtung ausgestattet ist, und Durchführen der Demontage des Rotors (3) und der Gondel (2) von derselben auf dieselbe Art und Weise,
und, nach der notwendigen Verweilzeit des jeweiligen Rotors (3) und der Gondel (2) auf dem Boden:
- erneutes Hochfahren der Gondel (2) und des Rotor (3) in umgekehrter Reihenfolge durch Transport der Kran-Träger-Gruppe (6) zwischen den derart demontierten Windkraftanlagen.

14. Schnelldemontageverfahren eines Rotors (3) und einer Gondel (2) des Masts (1) einer Windkraftanlage nach einem der Ansprüche 11 bis 13, **dadurch gekennzeichnet, dass** eine modulare Winde (11) verwendet wird, die Tel der Hubmittel (11 bis 14) ist und imstande, durch Schnellverbindungsmittel an einer Stelle außen am Mast (1) jeder Windkraftanlage derselben Art befestigt zu sein, und dass eine zweite Umlenkrolle (14) dauerhaft im Mast (1) im unteren Abschnitt desselben befestigt ist und dass ein Kabel (12) der modularen Winde (11) durch eine Öffnung (15) unten am Mast (1) läuft.

15. Schnelldemontageverfahren eines Rotors (3) und einer Gondel (2) des Masts (1) einer Windkraftanlage nach einem der Ansprüche 11 bis 14, **dadurch gekennzeichnet, dass** alle Aktionen des Krans (7) ferngesteuert sind.
